# EUROPEAN PATENT APPLICATION

(11) **EP 0 657 647 A1**
(43) Date of publication of application: **14.06.1995**
(21) Application number: 94300572.8
(22) Date of filing: 26.01.1994
(51) Int. Cl.: F03D 11/00

(54) **Noise reduction for wind turbine**

(30) Priority: 09.11.1993 GB 9323026
(71) Applicant: GEC-MARCONI LIMITED, Stanmore, Middlesex HA7 4LY (GB)
(72) Inventor: Watkinson, Peter, Sherborne, Dorset. DT9 4HU (GB)
(74) Representative: Hoste, Colin Francis

(57) **Abstract**

The noise emitted by a wind turbine is reduced by securing of a plurality of acoustically absorbing tiles (6) to the surface of the wind turbine support tower. Each tower is formed by high density layer (2) linked to the wind turbine surface by a layer of plastics foam material (8).

## Description

This invention relates to noise emission reduction and particularly to the reduction of noise emitted by the tower of a wind turbine.

Wind turbines conventionally comprise a tall tower of circular or polygonal cross-section with a nacelle mounted at the top, the nacelle mounting a large multi-bladed propeller rotating about the horizontal axis and connected through a system of gears to an electrical generator also contained within the nacelle, the nacelle is arranged to rotate about a vertical axis on top of the tower so as to keep the propeller disc facing into the wind. All of the parts driven by the turbine mechanically are contained within the upper nacelle and electrical power generated within the nacelle is carried down the tower and away to its destination by cables and rotary electrical connectors.

Since the wind turbine includes a propeller disc comprising a plurality of aerodynamic vanes over which the wind moves and contains rotating machinery the wind turbine inevitably generates noise. Due to the necessity to place wind turbines on high windswept points and due to the fact that the noise is generated by the parts at the top of the wind turbine such noise can be a problem over a large area around the wind turbine since the noise can travel along a direct straight line path to considerable distances without encountering any absorbing obstruction.

This problem is accentuated by the fact that most wind turbines generate noise at one or more discrete frequencies which are distinctive of the wind turbine design as well as generating noise across a continuous spectrum so where a farm of a number of identical wind turbines is set up their combined noise at these discrete frequencies, being at the same frequency for all of the turbines, can carry for several miles.

It has been found that a major source of this noise is mechanical vibrations generated by the moving parts inside the nacelle which are transmitted into the nacelle structure and then into the tower. This mechanical vibration causes the tower structure to vibrate and it is this vibration of the tower structure which emits the noise.

It has been attempted to solve this problem by fitting vibration isolating mounts between the machinery in the nacelle and the actual nacelle and tower structures but this has not been fully effective in eliminating this noise.

This invention was intended to eliminate or at least reduce noise emission from wind turbine towers.

This invention provides apparatus for reducing noise emission from a structure vibrating at specific discrete frequencies comprising a plurality of acoustically absorbing tiles secured to the surface of the structure, each tile comprising a high density layer linked to the structure by a layer of plastics material.

Apparatus employing the invention will now be described by way of example only with reference to the accompanying diagrammatic figures, in which;
Figure 1 shows a general view of a wind turbine employing the present invention;
Figure 2 shows a first type of acoustically absorbing tile according to the present invention mounted on a wind turbine; and,
Figure 3 shows a second type of acoustically absorbing tile according to the present invention mounted on a wind turbine, similar parts having the same reference numerals throughout.

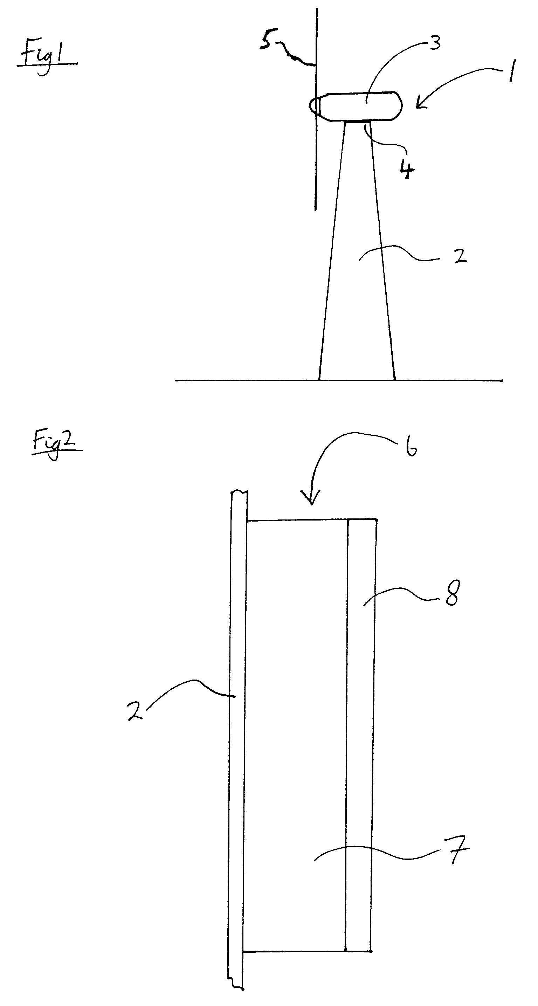

Referring to Figure 1 a wind turbine 1 is shown. The wind turbine 1 comprises a supporting tower 2 bearing a streamlined nacelle 3 at its upper end. A rotary joint 4 is situated between the tower 2 and the nacelle 3 to allow rotation of the nacelle 3 relative to the tower 2. At one end of the nacelle 3 a plurality of wind turbine vanes 5 are arranged symmetrically to form a turbine disc rotating about a horizontal axis. The vanes 5 are attached to a shaft inside the nacelle 3 which drives an electrical generator through suitable gearing, such arrangements are well known and need not be described in detail here.

The support tower 2 is circular in cross-section in order to minimise wind loads and is tapered with a larger diameter at its bottom end than at its top end.

It has been found that the troublesome noise emissions from such wind turbines are caused by mechanical noise from the shaft, bearings, gearing and electrical generator within the nacelle 3 being transmitted into the structure of the support tower 2 and causing the outer surface of the support tower 2 to vibrate at the same frequency as the driving mechanical vibration. This vibration is substantially eliminated by arranging a plurality of acoustically absorbing tiles 6 on the outer surface of the support tower 2 to absorb the vibration.

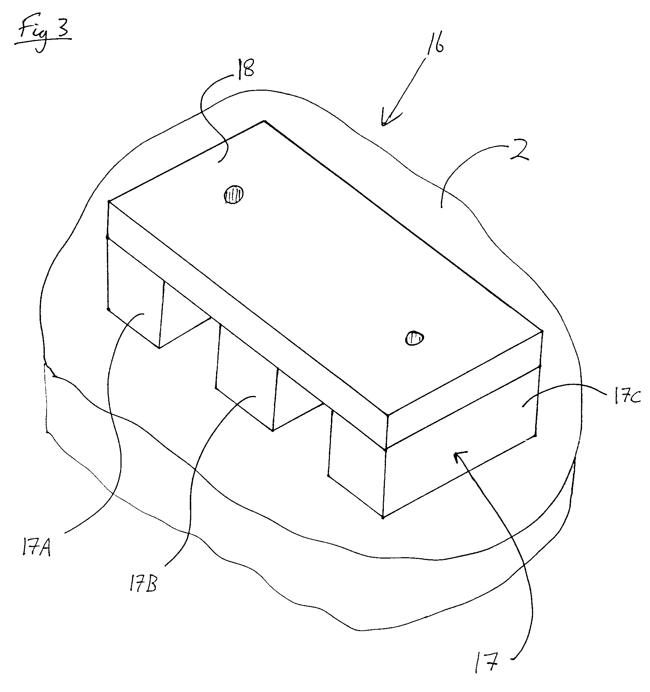

Referring to Figure 2 a first type of acoustically absorbing tile 6 secured to the outer surface of the support tower 2 is shown in cross-section. The acoustically absorbing tile 6 comprises a first layer 7 of polyurethane plastic foam containing enclosed gas bubbles and a second metal plate layer 8 attached to the polyurethane foam layer 7. The free surface of the polyurethane foam layer 7 opposite the metal plate 8 is secured to the inner surface of the support tower 2 by adhesive.

In operation each acoustically absorbing tile 6 acts as an acoustic absorber of the damped weight and spring resonator type with the metal plate 8 being the weight and the polyurethane foam 7 acting as the spring. The acoustic characteristics of the tiles 6 are arranged so that they absorb acoustic energy at the frequency of the noise emissions to be eliminated. The characteristics of resonators of this type are well known and for any particular frequency which it is desired to have the tile absorb the necessary combinations of foam thickness and plate thickness can easily be calculated once the density of the metal forming the plate 8 and the modulus of elasticity of the foam are known. The modulus of elasticity of the polyurethane foam will of course vary depending on the proportion of gas bubbles it contains.

Polyurethane foam with enclosed gas bubbles is used to provide a damper element having a very low stiffness spring portion so as to enable the absorbing tile to absorb low frequency acoustic energy without the tile thickness required being excessive.

Referring to figure 3 a second type of acoustically absorbing tile 16 according to the invention is shown. The acoustically absorbing tile 16 comprises a first layer 17 of polyurethane plastic and a second metal plate layer 18 attached to the polyurethane layer 17. The polyurethane plastic layer 17 is discontinuous and is formed by three separate blocks 17A, 17B, 17C of polyurethane material with gaps between them. The free surfaces of each of the polyurethane blocks 17 are secured to the inner surface of the support tower 2 by adhesive.

As in the previous example, each acoustically absorbing tile 16 acts as an acoustic absorber of the clamped spring and resonator type.

Three separate polyurethane blocks 17 are used to provide a damper element having a very low stiffness spring portion compared to a solid single block of polyurethane. By varying the proportions of the polyurethane blocks and gaps (the shape factor) in the polyurethane layer 17 the stiffness of the polyurethane layer 17 can be set to any desired value to give the desired absorbtion characteristics.

Three separate blocks of polyurethane can conveniently be used, but any other number could be used if desired.

In both cases above the acoustically absorbing tiles could be attached to the outside of the tower, but attaching them to the inside is preferred to conceal the tiles, and protect them from weathering.

It would, of course, be possible to combine the two types of acoustically absorbing tile shown and use a tile having a plurality of separate blocks of foamed polyurethane material as a damper element.

Conveniently the acoustically absorbing tiles are rectangular for easy manufacture and to allow them to fit together on the surface of the tower 2 but this is not essential.

In practice it has been found that it is not generally necessary to completely cover the tower 2 with acoustic damping tiles but that only the upper portion of the tower 2 nearest the nacelle 3 needs to mount tiles to prevent noise emission and that even in this region only a fraction of the tower surface needs to be covered, as a result where a wind turbine emits noise at two or more discrete frequencies it is possible to interlace a corresponding number of separate arrays of acoustically absorbing tiles, each array being of tiles being optimised for one of the emission frequencies.

Other plastics materials besides polyurethane could be used to make the plastics or plastics foam layer, but polyurethane has been found to be particularly effective in practice because the elastic moduli of some polyurethanes change relatively little with temperature. This makes it easier to ensure that the acoustic absorbing tiles will prevent noise emission from the wind turbine under all weather conditions.

The tower 2 has been described as being circular in cross-section, it could of course be polygonal in cross-section without affecting the invention.

Although this invention has been discussed in terms of reducing or preventing noise emission from wind turbines the acoustically absorbing tiles can be usefully employed to prevent noise emission from any structures which emit noise at one or more discrete frequencies, such as transformers.

## Claims

1. Apparatus for reducing noise emission from a structure vibrating at specific discrete frequencies comprising a plurality of acoustically absorbing tiles secured to the surface of the structure, each tile comprising a high density layer linked to the structure by a layer of plastics material.

2. Apparatus as claimed in claim 1 in which the plastics material is a plastics foam material.

3. Apparatus as claimed in claim 1 or claim 2 in which the layer of plastics material is discontinuous.

4. Apparatus as claimed in any preceding claim in which the high density layer is a metal plate.

5. Apparatus as claimed in any preceding claim in which the plastics material is polyurethane.

6. Apparatus as claimed in any preceding claim in which the structure is a wind turbine.

7. Apparatus as claimed in any preceding claim in which the structure is a transformer.
